# EUROPEAN PATENT APPLICATION

(11) **EP 2 835 993 A1**
(43) Date of publication of application: **11.02.2015**
(21) Application number: 13306135.8
(22) Date of filing: 07.08.2013
(51) Int. Cl.: H04W 8/22

(54) **Network Node and Method**

(71) Applicant: ALCATEL LUCENT, 92100 Boulogne-Billancourt (FR)
(72) Inventor: Wong, Shin Horng, Swindon, Wiltshire SN5 7DJ (GB); Puddle, Nicola, Swindon, Wiltshire SN5 7DJ (GB)
(74) Representative: Coghlan, Judith Elizabeth Kensy

(57) **Abstract**

A method of providing user equipment with assistance information in a heterogeneous wireless telecommunications network, a computer program product and network control node operable to perform that method. The method comprises: determining user equipment assistance information capability; selecting appropriate assistance information for user equipment based on the determined capability; and communicating the assistance information to the user equipment. It will be appreciated that aspects and embodiments may allow a network to provide specific assistance information relating to low power node proximity, rather than a network providing all information irrespective of user equipment capability. By providing only relevant information, overall signalling within a network may be reduced.

## Description

### FIELD OF THE INVENTION

A method of providing user equipment with assistance information in a heterogeneous wireless telecommunications network, a computer program product and network control node operable to perform that method.

### BACKGROUND

Wireless telecommunications systems are known. In such systems, mobile communication devices (for example, mobile telephones) are operable to communicate with base stations provided by network providers.

In known wireless telecommunications systems, radio coverage is provided to network connectible devices such as mobile telephones, or wireless devices such as iPads or other similar tablets, within areas known as cells. A base station is typically located in each cell to provide radio coverage. Network connectible devices in each cell are typically operable to receive information and data from a base station and to transmit information and data to a base station.

User equipment roam through a wireless communication system. Base stations are provided which support those areas of radio coverage. A number of such base stations are provided and are distributed geographically in order to provide a wide area of coverage to user equipment.

When user equipment is within an area served by a base station, communications may be established between the user equipment and the base station over associated radio links. Each base station typically supports a number of sectors within a geographical area of service. Typically, a different antenna within a base station supports each associated sector. Each base station has multiple antennas.

Traditional base stations provide coverage in relatively large geographical areas and those cells are often referred to as "macro" cells. It is possible to provide a heterogeneous network (HetNet) where smaller sized cells are provided within macro cells. Such smaller sized cells are sometimes referred to as micro cells, metro cells, pico cells or femto cells. One way to establish a small cell is to provide a small cell base station, also known as a low power node, which provides coverage having a relatively limited range within the coverage area of a macro cell.

The transmission power of a small cell base station is relatively low and, as a result, each small cell provides a small coverage area in comparison to that provided by a macro cell and may be used, for example, to provide coverage in a network hot spot or an office or a home.

Small cells are typically provided where communications coverage provided by a macro cell is poor, or where a user wishes to use an alternative communications link provided locally by a small cell base station to communicate with a core network. Small cells can also be provided to increase capacity within a network.

Although the deployment of small cell base stations can provide advantages, unexpected consequences can occur.

Accordingly, it is desired to provide techniques suited to the operation of networks including small cell base stations.

### SUMMARY

A first aspect provides a method of providing user equipment with assistance information in a heterogeneous wireless telecommunications network, the method comprising: determining user equipment assistance information capability; selecting appropriate assistance information for user equipment based on the determined capability; and communicating the assistance information to the user equipment.

The first aspect recognises that small cells deployed within a macro cell layer may be used to improve capacity of a system. Provision of small cells within a network can result in both gains and losses. Gains may be achieved by offloading traffic from a macro cell to small cells and it can be shown that significant capacity improvement can be achieved by means of a HetNet deployment when compared to that of a homogeneous (macro cell only) network deployment. However, there are also losses or difficulties associated with HetNet network deployments.

One such issue is that the deployment of multiple small cells within a macro cell layer can occur on more than one frequency. That is to say, as users move through a region of a network it may be necessary for those user equipment to be reallocated or handed over to small cells provided within the macro layer. Such small cells can be provided on the same frequency as that being used by a macro cell or, even by the same network provider, those small cells may be provided to operate on a different frequency.

Aspects recognise that there are issues associated with discovery and identification of inter-frequency small cells by user equipment. Since small cells are typically scattered within the macro layer and provide a non-continuous coverage, it could be understood that continuously performing inter-frequency measurements may be deemed unnecessary and could cause significant issues regarding user equipment battery consumption and potential data transmission interruption. Such issues may particularly occur if user equipment has to operate in compressed mode to perform inter-frequency measurements to allow user equipment to detect small cells.

It may be possible to ameliorate disruption caused by such issues by allowing user equipment to operate in such disruptive modes with some assistance in relation to deciding when and where that operation occurs from the network. That is to say, it may be possible for a network to indicate some information regarding the presence of small cells to user equipment. Such information could help user equipment to detect small cells nearby. In other words, a network may be operable to provide a so-called "fingerprint", such that the user equipment can use that information to improve discovery efficiency and to save power consumption. Such information could include precise or approximate location information regarding small cells overlaid with a macro cell, or may, for example, include distance or proximity information relating to small cells. Distance information may, for example, include an indication of location to be determined by means of received signal comparative powers measured at user equipment or comparative measured path losses. The assistance information may even include frequency information regarding small cells with which users may be operable to use discontinuous reception in order to perform background searching. In general, the intention is to try and reduce the impact on power consumption and data transmission associated with searching for inter-frequency cells which may be suitable handover targets, by introducing a degree of proximity detection to be performed by user equipment.

Knowing what kind of information to provide user equipment with may be difficult and, thus, aspects and embodiments described herein recognise that it can be possible to determine what type of information a network may provide to user equipment in order that appropriate fingerprints can be provided, rather than providing a complete set of coordinates to all user equipment. Such techniques allow for a reduction in overall signalling overhead when implementing fingerprinting techniques. The first aspect recognises that it can be helpful to determine what type of assistance information ought to be provided to particular users, based on user capability.

In one embodiment, determining comprises: requesting an indication of assistance information capability from user equipment and awaiting a response. Accordingly, a network control node may actively request information from user equipment regarding its capability so that appropriate assistance information can be provided on a user basis.

In one embodiment, determining comprises: receiving an indication of user equipment measurement capability. Accordingly, user equipment may report an indication of measurement capability and a network may be operable to provide suitable assistance information based upon measurement options or functions available to a user.

In one embodiment, determining comprises: receiving an indication of assistance information capability from user equipment as part of RRC connection setup messaging. Accordingly, rather than specifically requesting information regarding measurement functionality available to a user, that information may be available via other means, and determining may require that a network control node take steps to source user capability from information already available via other channels or reports made by a user. User equipment may, for example, be configured or operable to report measurement capability on setup of an RRC connection with a network.

In one embodiment, the indication is included in a user equipment capability container message. Accordingly, user capabilities may be reported to a network irrespective of whether a network needs that information. Similarly, if user capabilities change, a user may be operable to inform the network via capability change indicator.

In one embodiment, if it is determined that user equipment has more than one assistance information capability; the method comprises: selecting a subset of the determined assistance information capabilities and selecting appropriate assistance information for the user equipment based on the selected subset of determined capabilities. In one embodiment, the subset consists of one determined assistance information capability. Accordingly, it will be understood that a user may have more than one available "fingerprinting" method, or measurement capability. A network may use all available methods, but, in order to save signalling, may choose to implement only some of all available methods. A user may be configured to express a preference, or operational parameters relating to a particular form of assistance information, and the network may be configured to take into account such preference or operational parameters in order to control network signalling associated with assistance information techniques. For example, a user may be operable to use RF measurement to determine location and a user may require 3 cells in order to perform a triangulation to offer an indication of location within a network. In such a scenario, a network may provide appropriate assistance information, based on a required RF signature from 3 cells, but no more.

In one embodiment, the assistance information relates to a position of a low power node in a heterogeneous wireless telecommunications network. Accordingly, assistance information or "fingerprinting" techniques according to the method described herein may be of use when users are operating in a heterogeneous network in which a large number of small cells are present. A large number of cells in a network may pose signalling and measurement issues to user equipment, and operation of a user may be made more efficient if some actions could be restricted to instances where users are in a particular location within the network.

In one embodiment, if the user equipment indicates standalone GPS capability, the assistance information comprises: at least one GPS coordinate. In one embodiment, if the user equipment indicates radio frequency (RF) condition location capability, the assistance information comprises: an indication of RF condition criteria. Accordingly, an indication of RF condition criteria may comprise an RF signature, a received signal strength, a received signal from a selected Cell_ID, an RSCP or RSSI relating to a LPN fingerprint, or location, or any other similar means to locate a user within a region of coverage in a network.

In one embodiment, the method further comprises: receiving an indication that user equipment has met criteria set out in the assistance information, and requesting user equipment meeting the criteria initiate a measurement. Accordingly, once a user meets criteria set out in assistance information, a network may be operable to request a user initiates a further action.

In one embodiment, the measurement comprises an inter-frequency RF condition measurement. Accordingly, disruption to network operation at user equipment caused by a need to perform an inter-frequency measurement may be reduced.

A computer program product operable, when executed on a computer, to perform the method of the first aspect.

A third aspect provides a network control node operable to provide user equipment with assistance information in a heterogeneous wireless telecommunications network, the network control node comprising: determination logic operable to determine user equipment assistance information capability; assistance information selection logic operable to select appropriate assistance information for user equipment based on the determined capability; and communication logic operable to communicate the selected assistance information to user equipment.

In one embodiment, the determination logic is operable to request an indication of assistance information capability from user equipment and awaiting a response.

In one embodiment, the determination logic is operable to receive an indication of user equipment measurement capability.

In one embodiment, the determination logic is operable to receive an indication of assistance information capability from user equipment as part of RRC connection setup messaging.

In one embodiment, the indication is included in a user equipment capability container message.

In one embodiment, if it is determined that user equipment has more than one assistance information capability; the assistance information selection logic is operable to select a subset of the determined assistance information capabilities and select appropriate assistance information for the user equipment based on the selected subset of determined capabilities.

In one embodiment, the subset consists of one determined assistance information capability.

In one embodiment, the assistance information relates to a position of a low power node in a heterogeneous wireless telecommunications network.

In one embodiment, if the user equipment indicates standalone GPS capability, the assistance information comprises: at least one GPS coordinate.

In one embodiment, if the user equipment indicates radio frequency (RF) condition location capability, the assistance information comprises: an indication of RF condition criteria.

In one embodiment, the network node further comprises: reception logic operable to receive an indication that user equipment has met criteria set out in the assistance information, and request user equipment meeting the criteria initiate a measurement.

In one embodiment, the measurement comprises an inter-frequency RF condition measurement.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates schematically an example HetNet deployment; and
Figure 2 is a signalling diagram which illustrates schematically general method steps according to one embodiment.

### DESCRIPTION OF THE EMBODIMENTS

In a UMTS network architecture, user equipment roam through a wireless telecommunications system. Base stations are provided which support areas of radio coverage. A number of such base stations are provided and are distributed geographically in order to provide a wide area of coverage to user equipment.

When user equipment is within an area served by a base station, communication may be established between the user equipment and the base station using associated radio links. Each base station typically supports a number of sectors within the geographical area of service.

Typically, different antenna within a base station supports each associated sector. Each base station has multiple antennas. It will be appreciated that a large number of user equipment and large number of base stations may be present in a typical communication network. It will also be appreciated that different network architectures may be implemented including, for example, a Long Term Evolution (LTE) network in which the functionality provided by network nodes described above is provided by network nodes which can be named differently but have analogous functionality.

Traditional base stations provide coverage in relatively large geographical areas and those cells are often referred to as macro cells. It is possible to provide a heterogeneous network (HetNet) where smaller sized cells supported by small cell base stations, sometimes referred to as low power nodes, are provided within macro cells supported by macro base stations. Such smaller sized cells are often referred to as micro cells, metro cells, pico cells or femto cells. One way to establish a small cell is to provide a small cell base station that provides coverage having a relatively limited range within the coverage of the macro cell.

The transmission power of a small cell base station is relatively low and therefore each small cell typically provides a small radio service coverage area to user equipment compared to that provided by a macro cell. Typically, a small cell would be used to provide radio coverage in an office or a home.

Such small cells are typically provided where the communications coverage provided by a macro cell is poor, or where a user wishes to use an alternative communications link provided locally by a small cell base station, to communicate with the core network and/or to increase capacity within a network. That is to say, in a heterogeneous network, small cells supported by low power nodes (LPN) can be placed within a macro cell supported by a macro cell base station. Provision of low power nodes within a network may operate to increase the capacity of the network by allowing the offloading of some user equipment and the traffic associated with that user equipment from a macro cell layer to a layer provided by the low power nodes.

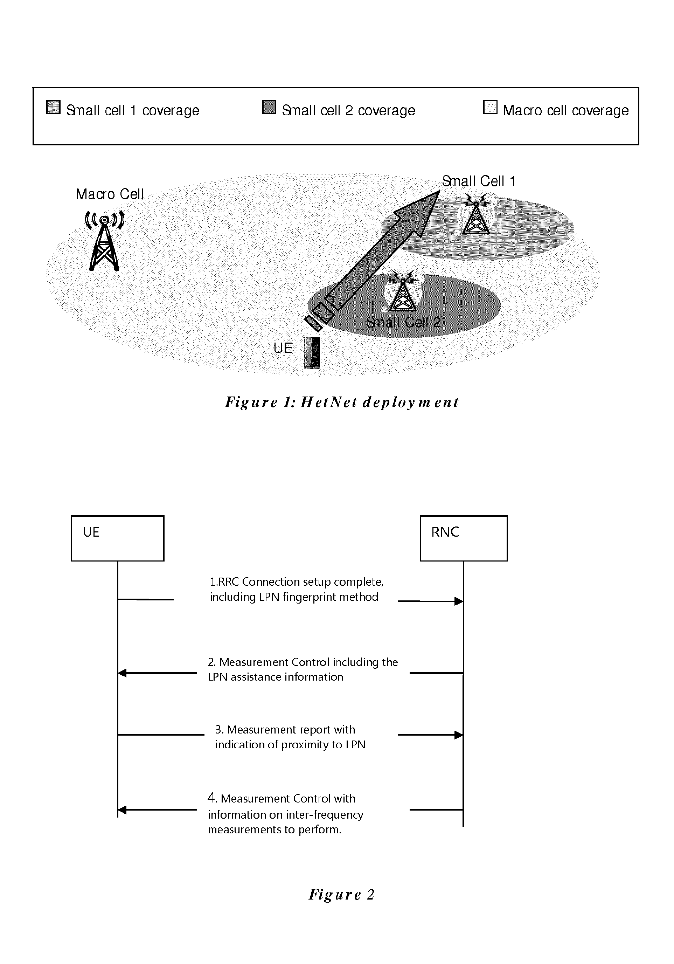

Figure 1 illustrates schematically a network comprising a macro base station and two low power nodes. Each low power node supports a small cell (small cell 1, small cell 2). A macro base station supports a region of radio coverage as a macro cell. User equipment (UE) can freely roam within the regions of radio coverage provided by the macro base station and the two low power nodes. In the example illustrated, the UE is operable to move across the two small cells (small cell 1, small cell 2).

One such issue is that the deployment of multiple small cells within a macro cell layer can occur on more than one frequency. That is to say, as users move through a region of a network it may be necessary for those user equipment to be reallocated or handed over to small cells provided within the macro layer. Such small cells can be provided on the same frequency as that being used by a macro cell or, even by the same network provider, those small cells may be provided to operate on a different frequency.

Aspects recognise that there are issues associated with discovery and identification of inter-frequency small cells by user equipment. Since small cells are typically scattered within the macro layer and provide a non-continuous coverage, it could be understood that continuously performing inter-frequency measurements may be deemed unnecessary and could cause significant issues regarding user equipment battery consumption and potential data transmission interruption. Such issues may particularly occur if user equipment has to operate in compressed mode to perform inter-frequency measurements to allow user equipment to detect small cells.

It may be possible to ameliorate disruption caused by such issues by allowing user equipment to operate in such disruptive modes with some assistance in relation to deciding when and where that operation occurs from the network. That is to say, it may be possible for a network to indicate some information regarding the presence of small cells to user equipment. Such information could help user equipment to detect small cells nearby. In other words, a network may be operable to provide a so-called "fingerprint", such that the user equipment can use that information to improve discovery efficiency and to save power consumption. Such information could include precise or approximate location information regarding small cells overlaid with a macro cell, or may, for example, include distance or proximity information relating to small cells. Distance information may, for example, include an indication of location to be determined by means of received signal comparative powers measured at user equipment or comparative measured path losses. The assistance information may even include frequency information regarding small cells with which users may be operable to use discontinuous reception in order to perform background searching. In general, the intention is to try and reduce the impact on power consumption and data transmission associated with searching for inter-frequency cells which may be suitable handover targets, by introducing a degree of proximity detection to be performed by user equipment.

Knowing what kind of information to provide user equipment with may be difficult and, thus, aspects and embodiments described herein recognise that it can be possible to determine what type of information a network may provide to user equipment in order that appropriate fingerprints can be provided, rather than providing a complete set of coordinates to all user equipment. Such techniques allow for a reduction in overall signalling overhead when implementing fingerprinting techniques.

The first aspect recognises that it can be helpful to determine what type of assistance information ought to be provided to particular users.

### Overview

Before discussing the embodiments in any more detail, first an overview will be provided. Aspects and embodiments introduce a new indication to be received from user equipment to indicate to the network a preferred method to perform fingerprint operation, for example, in respect of finding low power nodes in a heterogeneous network. That indication may allow a network to signal appropriate or specific assistance information to user equipment to allow for assistance in fingerprinting techniques.

In some embodiments, an indication from the user equipment could be one or more of, for example:
1) an indication that the user equipment is capable of performing stand-alone GPS measurements in order to locate a low power node fingerprint; or
2) radio frequency parameters; for example, RSCP or RSSI to identify a location of an LPN fingerprint.

Performing non stand-alone GPS is not a required indication for a user to perform a low power node fingerprint. However, if it is already possible or occurring at user equipment, a network may configure user equipment to perform GPS measurements to determine a location at which further action may be required. If the user equipment is operable to report GPS measurements and a network has an indication of the location of low power nodes operating on a different frequency, it may be able to accurately identify an appropriate location from measurement reports received from the user equipment and then configure user equipment to perform inter-frequency measurements when in the vicinity of the relevant low power nodes. It will be appreciated that stand-alone GPS is a recommended indication from user equipment, since the network does not need to configure the user equipment to perform GPS measurements.

In relation to radio frequency indicators, in one embodiment user equipment can provide an indication of the number of neighbour cells required for a low power node fingerprint. For example, user equipment may require three cells in order to perform triangulation. In response, according to such an embodiment, a network may be operable to provide an RF signature for up to three cells but no more.

Although user equipment may already be operable to specify some kind of positioning capability according to which user equipment can report its capability to measure its location by some means unrelated to UTRAN, this itself may not be sufficient information for a network to determine if that positioning capability is the user equipment's preferred method of performing low power node fingerprinting.

Aspects and embodiments described herein recognise that the method by which an indication is received from user equipment regarding its ability to perform LPN fingerprinting may form part of RRC messaging. In particular, it could be part of user equipment capability container as a measurement capability. Such information can be included in RRC messages; for example, RRC connection set-up complete messaging. Use of such a method may allow user equipment capability to always be sent to a network and it is largely a network concern as to whether that information is then used.

Aspects and embodiments may be such that new trigger events can be defined by a network for user equipment to indicate proximity to an inter-frequency low power node. Aspects and embodiments may allow a network to control the behaviour of user equipment, rather than allowing user equipment autonomous control of proximity implementations. Accordingly, a network may be aware of user equipment fingerprinting methods and therefore a network can configure parameters based on that selected method in order to control user equipment behaviour appropriately.

According to one embodiment, the measurement capabilities of user equipment are sent to a network in a "capability container" message. Inclusion of such new measurement capabilities in that message may allow for re-use of existing functionality which allows user equipment to report changes if its capabilities change. For example, if user equipment no longer wishes to use stand-alone GPS to perform low power node fingerprinting, it may be operable to inform the network of that fact via a capability change indicator.

It will be appreciated that aspects and embodiments may allow for user equipment to express capability to use more than one fingerprinting method. User equipment may express a preference for one or more of its reported capabilities and/ or a network may be operable to select one of the available methods to be used by user equipment for fingerprinting.

Figure 2 is a signalling diagram illustrating schematically main steps of a method according to one embodiment. According to the method illustrated in Figure 2, the first step is that user equipment may be operable to report a new indication of available methods or a preferred method to perform low power node fingerprinting techniques. At stage 2 of the method, the network may be operable to provide user equipment with appropriate assistance data regarding low power node locations. According to step 3 of the method, a user equipment may be operable to report its proximity to fingerprinted low power nodes and, at step 4, a network may be operable to set up appropriate inter-frequency measurements to allow user equipment to potentially find and reselect or hand over to low power nodes operating on a different frequency.

It will be appreciated that aspects and embodiments may allow a network to provide specific assistance information relating to low power node proximity, rather than a network providing all information irrespective of user equipment capability. By providing only relevant information the overall signalling within a network may be reduced.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/ or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of providing user equipment with assistance information in a heterogeneous wireless telecommunications network, said method comprising:
determining user equipment assistance information capability;
selecting appropriate assistance information for said user equipment based on said determined capability; and
communicating said assistance information to said user equipment.

2. A method according to claim 1, wherein determining comprises: requesting an indication of assistance information capability from said user equipment and awaiting a response.

3. A method according to claim 1 or claim 2, wherein determining comprises:
receiving an indication of user equipment measurement capability.

4. A method according to any preceding claim, wherein determining comprises:
receiving an indication of assistance information capability from said user equipment as part of RRC connection setup messaging.

5. A method according to claim 4, wherein said indication is included in a user equipment capability container message.

6. A method according to any preceding claim, wherein if it is determined that user equipment has more than one assistance information capability; selecting a subset of said determined assistance information capabilities and selecting appropriate assistance information for said user equipment based on said selected subset of determined capabilities.

7. A method according to claim 6, wherein said subset consists of one determined assistance information capability.

8. A method according to any preceding claim, wherein said assistance information relates to a position of a low power node in a heterogeneous wireless telecommunications network.

9. A method according to any preceding claim, wherein if said user equipment indicates standalone GPS capability, said assistance information comprises: at least one GPS coordinate.

10. A method according to any preceding claim, wherein if said user equipment indicates radio frequency (RF) condition location capability, said assistance information comprises: an indication ofRF condition criteria.

11. A method according to any preceding claim, wherein said method further comprises:
receiving an indication that said user equipment has met criteria set out in said assistance information, and
requesting user equipment meeting said criteria initiate a measurement.

12. A method according to claim 11, wherein said measurement comprises an inter-frequency RF condition measurement.

13. A computer program product operable, when executed on a computer, to perform the method of any one of claims 1 to 12.

14. A network control node operable to provide user equipment with assistance information in a heterogeneous wireless telecommunications network, said network control node comprising:
determination logic operable to determine user equipment assistance information capability;
assistance information selection logic operable to select appropriate assistance information for said user equipment based on said determined capability; and
communication logic operable to communicate said assistance information to said user equipment.
